# EUROPEAN PATENT APPLICATION

(11) **EP 4 763 628 A1**
(43) Date of publication of application: **24.06.2026**
(21) Application number: 25217223.4
(22) Date of filing: 20.11.2025
(51) Int. Cl.: B60R 16/023, H04L 67/12

(54) **VEHICLE SIGNALS COMMUNICATED USING POSIX-BASED DIRECTORY INTERFACE**

(30) Priority: 20.12.2024 US 202418990554
(71) Applicant: BlackBerry Limited, Waterloo, Ontario N2K 0A7 (CA)
(72) Inventor: FERGUSON, Geordon Thomas, Waterloo, ON, N2K 0A7 (CA); TIESSEN, Benjamin David Dick, Waterloo, ON, N2K 0A7 (CA); ETHIER, Sheridan Edward, Waterloo, ON, N2K 0A7 (CA); MOON, Justin Earl, Waterloo, ON, N2K 0A7 (CA)
(74) Representative: MERH-IP Matias Erny Reichl Hoffmann Patentanwälte PartG mbB

(57) **Abstract**

A method of obtaining vehicle signal data. The method comprises reading a vehicle signals catalog by a communication service layer application that executes on a computer system, wherein the catalog defines vehicle signals as full path filenames; receiving a request for a value of a vehicle signal by the communication service layer application from a second application, wherein the request identifies the vehicle signal as a full path filename; obtaining the value of the vehicle signal by the communication service layer application; and returning the value of the vehicle signal the second application.

## Description

### CROSS-REFERENCE TO RELATED APPLICATIONS

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Modern motor vehicles comprise a complex mix of electro-mechanical and electronic systems. Many systems within vehicles are controlled, at least in part, by electronic units that are in effect computers. Sensors report current condition values back to electronic units, and the electronic units control associated electro-mechanical systems based on the current condition values and inputs from other sources including from a driver. Electronic units controlling different electro-mechanical systems may report current conditions of their system up to a central computer system (e.g., a telematics unit) via communication facilities such as a car area network (CAN) bus or other communication link. As motor vehicles have become more complex and the number of electronic units in vehicles has increased, communications within the motor vehicle among various systems has become complex.

### SUMMARY

In an embodiment, an in-vehicle electronic unit comprising a communication service layer is disclosed. The in-vehicle electronic unit comprises a processor; a memory, wherein a non-transitory portion of the memory stores a vehicle signals catalog that defines vehicle signals as full path filenames, wherein each full path filename comprises one or more encompassing directory names and a filename identifying a vehicle signal; an operating system (OS) stored in the non-transitory portion of the memory that, when executed by the processor, manages access to the memory and manages access to the processor; an application stored in the non-transitory portion of the memory that, when executed by the processor, processes at least one vehicle signal; and a communication service layer stored in the non-transitory portion of the memory. When executed by the processor, the communication service layer reads the vehicle signals catalog from the non-transitory portion of the memory upon initialization of the communication service layer, receives a request from the application to access a vehicle signal, wherein the request identifies the vehicle signal using a full path filename associated with the vehicle signal, obtains a first value of the vehicle signal, maps the first value of the vehicle signal to a second value based on a definition of normalized values for the vehicle signal in the catalog, and returns the second value to the application.

In another embodiment, a method of obtaining vehicle signal data by an application executing on a processor is disclosed. The method comprises reading a vehicle signals catalog by a communication service layer application that executes on a computer system, wherein the vehicle signals catalog defines vehicle signals as full path filenames, wherein each full path filename comprises one or more encompassing directory names and a filename identifying a vehicle signal; receiving a request for a value of a vehicle signal by the communication service layer application from a second application executing on the computer system, wherein the request is received via a POSIX interface provided by the communication service layer application and wherein the request identifies the vehicle signal as a full path filename; obtaining the value of the vehicle signal identified in the request by the communication service layer application; and returning the value of the vehicle signal identified in the request to the second application.

In yet another embodiment, a method of obtaining vehicle signal data by an application executing on a processor is disclosed. The method comprises reading a vehicle signals catalog by a communication service layer application that executes on a computer system, wherein the vehicle signals catalog defines vehicle signals as full path filenames, wherein each full path filename comprises one or more encompassing directory names and a filename identifying a vehicle signal; receiving a first request for a value of a vehicle signal by the communication service layer application from a second application executing on the computer system, wherein the first request identifies the vehicle signal as a full path filename; in response to receiving the first request, determining a first access definition for the vehicle signal by the communication service layer application based on the vehicle signals catalog; determining by the communication service layer application that the second application has read access permission for the vehicle signal identified in the first request based on the first access definition for the vehicle signal and based on an identity of the second application; obtaining the value of the vehicle signal identified in the first request by the communication service layer application; and returning the value of the vehicle signal identified in the first request to the second application. The method further comprises executing an access control list (ACL) command by the communication service layer application, wherein the ACL command replaces the first access definition for the vehicle signal with a second access definition in the vehicle signals catalog; receiving a second request for a value of the vehicle signal by the communication service layer application from the second application, wherein the second request identifies the vehicle signal as a full path filename; in response to receiving the second request, determining the second access definition for the vehicle signal by the communication service layer application based on the vehicle signals catalog; determining by the communication service layer application that the second application does not have read access permission for the vehicle signal identified in the second request based on the second access definition for the vehicle signal and based on the identity of the second application; and returning a rejection of the second request to the second application.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2 is a block diagram of another system according to an embodiment of the disclosure.
FIG. 3 is a flow chart of a method according to an embodiment of the disclosure.
FIG. 4A and FIG. 4B is a flow chart of another method according to an embodiment of the disclosure.
FIG. 5 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

As electronics units in motor vehicles have become more numerous and in-vehicle software executing on the electronics units has become more sophisticated, the problem of providing access to vehicle signals and to secure such access to vehicle signals prudently has become a significant technical problem. In a narrow definition, a vehicle signal refers to an in-vehicle parameter value. Examples of vehicle signals in accord with this narrow definition are tire pressure values, engine revolutions per minute (RPM) values, gas tank fuel level value, passenger cabin ambient air temperature value, outside air temperature value, anti-lock braking enabled state value, passenger front airbag activated state value, and others. In a broad definition, a vehicle signal can refer both to in-vehicle parameter values (e.g., values or states that are read only) and to control commands to electronic units (e.g., values or states that are written or commanded), such as a command to modulate a fuel-air mixture introduced into an engine combustion chamber, such as a command to reduce a throttle position to maintain a cruise control vehicle speed setting. While most of the following description relates specifically to the first, narrow definition of vehicle signal, it will be appreciated that much, if not all, of the benefit of the system disclosed herein can be adapted for use with the broader definition of vehicle signals that includes both vehicle parameter values and control commands.

At present, different in-vehicle electronic units define application programming interfaces (APIs) that other electronic units may use to access vehicle signals. These APIs may be different from one motor vehicle model to another vehicle model. For example, the API for accessing tire pressures in a Ford sedan motor vehicle may be different from the API for accessing tire pressures in a Ford pickup truck. In some cases, in fact, the API for accessing substantially the same vehicle signal in different vehicle models can be wildly different. This lack of commonality among APIs makes software reuse problematic and makes system integration more time consuming, more costly, and more error prone. It would be desirable that a common method of accessing vehicle signals could be relied upon by the electronic units in a motor vehicle, which would improve software reuse, saving development costs and streamlining system integration efforts. The present disclosure teaches a novel in-vehicle communication service layer that applications executing on in-vehicle electronics units can use to uniformly and securely access vehicle signals. The communication service layer can be implemented as software and/or firmware within an electronics unit or, in a testing/integration environment, on a computer system. An electronics unit is substantially similar to a computer system. Computer systems are described further hereinafter.

In an embodiment, vehicle signals are defined in a vehicle signals catalog as full path filenames. A full path filename comprises a root directory name followed by zero or more subdirectory names and terminates in a filename. An example full path filename identifying a vehicle signal could be /vehicle/cabin/HVAC/AmbientAirTemperature. In this example, 'vehicle' is a root directory; 'cabin' is a first level subdirectory that depends from the 'vehicle' root directory; 'HVAC' is a second level subdirectory that depends from the 'cabin' subdirectory, and 'AmbientAirTemperature' is a filename. While in this example the full path filename is represented using slash delimiters, it is understood that other delimiters may be used, such as dots, periods, commas, or colons. In an embodiment, the vehicle signals catalog conforms with or is compatible with a Vehicle Signal Specification (VSS) document or model supported by the Connected Vehicle Systems Alliance (COVESA). In an embodiment, the vehicle signals catalog defines a directory tree structure, and this directory tree structure is bound by the communication service layer to a mount point of a file system in an electronics unit or other execution platform during booting of the electronics unit or execution platform. As an example, the vehicle signals catalog may define a signal such as /Vehicle/Body/Mirrors/Left/IsHeatOn, and the communication service layer may bind or attach the directory tree structure including /Vehicle/Body/Mirrors/Left/IsHeatOn to a specific point in the file system on the electronics unit such as /dev/signal. In this case, then, the full path filename of this signal would be /dev/signal/Vehicle/Body/Mirrors/Left/IsHeatOn.

In an embodiment, the full path filenames comply with a POSIX directory structure. The use of a POSIX directory structure can provide some benefits including the ability for software developers to use well-known POSIX APIs such as OPEN, READ, WRITE, CLOSE, etc. The use of POSIX APIs allows software developers to use other tools and utilities that use POSIX APIs. The use of the POSIX directory structure allows the use of the well-known POSIX security permissions that can be defined for each of the nodes of the full path filename and for different electronic units and/or users which may attempt to access the filename (e.g., access the vehicle signal identified by the full path filename). Likewise, use of a POSIX directory structure can enable the use of utilities that interwork with a POSIX directory structure, for example use of POSIX compatible utilities invoked from a command line such as a CD command (change directory), a MK DIR command (make directory), a CAT command (list the contents of a file), a LS command (list the contents of a directory), and an ECHO command. It is understood, however, that the present disclosure is not limited to vehicle signals being defined based on a POSIX directory structure.

The signals catalog can define a set of permissions of a vehicle signal. For example, a permission to read, a permission to write, a permission to execute may be defined for a given vehicle signal for each of a specific user, a specific group, and for the world. The permissions of a given vehicle signal may be defined using a mask, for example a mask having nine fields, where a binary 1 value indicates the user or group or world has the permission and a binary 0 value indicates the user or group or world does not have the permission.

The signals catalog can define a value type of a vehicle signal, as a data representation type (e.g., binary value, float value, Boolean value, string value, etc.). The signals catalog can also define a unit for a vehicle signal and a valid value range for the vehicle signal. For example, a tire pressure value may be associated with units of pounds per square inch (PSI) or units of kilopascals (kP). For example, a tire pressure value may be associated with a valid range of values of 25 PSI to 40 PSI or a valid range of values of 170 kP to 310 kP. In this example range, it is understood that the tire pressure may physically be outside of this restricted range, but tire pressure values outside this range may be considered abnormal or dangerous or a value that raises an alarm indication. The permissions mask, units, and valid value ranges of vehicle signals are examples of metadata associated with filenames in the signals catalog. The signals catalog can also define metadata associated with each directory and/or subdirectory. Another example of metadata associated with a directory or subdirectory is whether the signals that are included within the directory or subdirectory should be treated as an aggregate. The ability to aggregate in this way can be useful when a set of signals are interrelated and dependent on each other. An example of aggregate data may be the constituent signals that make up location. Location, for example, may be defined by (1) a value of longitude, (2) a value of latitude, and (3) a value of altitude. Each of these values, in isolation, is incomplete and does not fully define a location. In aggregate, however, the collection of these three values do define a location. In this case, the directory or subdirectory having such an aggregate group of signals may be designated as aggregate in its metadata. Alternatively, metadata associated with directories and sub-directories may be defined in a different data structure separate from the vehicle signals catalog, for example in a separate file.

When an electronic unit powers on, the various software components executing on the electronic unit initialize. This can involve an operating system (OS) initializing, the communication service layer initializing, and one or more applications initializing. The communication service layer can be thought of as executing on top of and/or making use of the OS services. The applications can be thought of as executing on top of and/or making use of the OS and the communication service layer. The communication service layer can be thought of, in some contexts, as a middleware layer. The communication service layer can be thought of as operating in a way similar to software drivers.

When the communication service layer initializes, it reads the vehicle signals catalog, thereby learning the definitions of the vehicle signals and metadata about the vehicle signals and directories and sub-directories. In an embodiment, the communication service layer builds a tree-like data structure in memory based on reading the vehicle signals catalog that is conceptually equivalent to a filesystem but whose leaf-nodes do not correspond to files but rather to vehicle signals. The communication service layer maps commands and/or requests associated with directories, sub-directories, and filenames not to actual directories, sub-directories, and filenames but to the abstractions the communication service layer maintains. Said in other words, the communication service layer builds a tree data structure, based on the vehicle signals catalog, in which signals are the leaf nodes and are represented as files in a file system where the discrete interim elements of the path are represented as directories.

The communication service layer on a given electronic unit may subscribe, during initialization or shortly following completion of initialization, to receive updates on vehicle signals published by other communication service layers executing on other electronic units. Likewise, the communication service layer, during initialization, may indicate the vehicle signals that it will publish and/or make available to other authorized electronic units to receive. These actions of registering subscriptions and publications on initialization establishes an abstract communication link between the communication service layers executing on different electronic units.

After the communication service layer executing on an electronic unit has initialized and completed subscription and publication announcements or registrations, an application executing on the same electronic unit may request vehicle signal values from the communication service layer, and the communication service layer can obtain the requested vehicle signal value from another electronic unit (for example via a car area network (CAN) bus in the vehicle) or directly from an electro-mechanical system and/or sensor coupled to the electronic unit. The communication service layer, if it receives the information from an electro-mechanical system and/or sensor, may transform the vehicle signal value it receives to a normalized value and format, as defined by the vehicle signals catalog. The communication service layer then uses the normalized value to publish the vehicle signal.

In an embodiment, when the communication service layer is initialized, it may be invoked with one or more arguments that command the communication service layer to present vehicle signal values in a preferred representation format. For example, when invoked in an actual production motor vehicle, the communication service layer may be commanded to present vehicle signal values in binary format, that may be amenable to production software applications executing on the electronic unit. When invoked in a test environment, for example in a virtualized environment, the communication service layer may be commanded to present vehicle signal values in a different format more suitable for viewing by a software tester and/or system integrator, for example in ASCII format for presentation in a text editor. In an embodiment, when invoked, the communication service layer may be commended to employ English units (e.g., pounds, pounds per square inch, miles per hour, etc.) or instead to employ SI units (e.g., kilograms, pascals, kilometers per hour, etc.).

In an embodiment, the communication service layer may have its understanding of the vehicle signals catalog modified based on real-time commands. For example, in an embodiment, the communication service layer may respond to access control list (ACL) commands by adding vehicle signals, deleting vehicle signals, and/or modifying definitions of vehicle signals to its internal understanding of the vehicle signals catalog. This can support granting access privileges to vehicle signals at run-time versus statically configuring access privileges at compile time during development. Said in other words, using ACL commands with the communication service layers allows users and groups to be added for access (or for access to be revoked) to vehicle signals and/or directories and/or sub-directories without restarting the communication service layer. Generally, ACLs could be used to add access permissions or to take away access permissions. This functionality may be particularly useful during testing and/or system integration.

The communication service layer sketched above and described in further detail hereinafter is a particular technical solution, embodied as software and/or firmware in an electronic unit or on a computer, to the technical problem of providing access to vehicle signals while supporting flexibility and software reuse. Use of the communication service layer can reduce redesign and promote reuse of software to be embedded in electronic units by allowing a consistent and uniform process of accessing vehicle signals. Additionally, many vehicle signal names, using the model and approach described herein, may remain similar from vehicle to vehicle. Thus, a RightRearDoorLockEngaged vehicle signal may be referenced in the same way by software executing in an electronic unit disposed in a passenger car and in an electronic unit disposed in a pick-up truck, obviating the need to recode this software before reusing it.

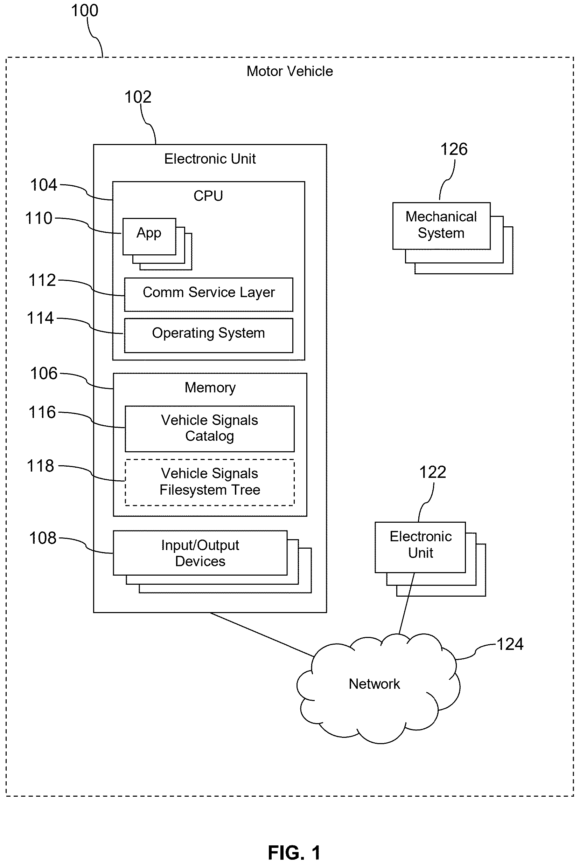

Turning now to FIG. 1, a motor vehicle 100 is described. The motor vehicle 100 may be a passenger car, a pickup truck, a sport utility vehicle (SUV), a mini-van, a delivery van, a delivery truck, a motorhome, a moving van, a moving truck, a tractor for a semi-trailer, or other motor vehicle. In an embodiment, the motor vehicle 100 comprises a first electronic unit 102 that communicates with a second electronic unit 122 via a network 124. In an embodiment, the network 124 may be a car area network (CAN) bus. The motor vehicle 100 further comprises one or more mechanical systems 126. At least some of the mechanical systems 126 may comprise sensors and/or electronic units 102, 122. For example, an engine may be a mechanical system 126 that comprises an electronic unit 102, 122 that functions as an engine electronic control unit.

The electronic units 102, 122 may be viewed as embedded computers in the sense that they are essentially a computer installed within and interacting with a larger electro-mechanical system. Other examples of mechanical systems may be wheel brakes, drivetrain transmission, lights, brake and signal lights, heater, air conditioner, and air bags. Examples of sensors may be tire pressure sensors, wheel speed sensors, air temperature sensors, brightness sensors, precipitation sensors, radar sensors, and others. Examples of electronic units 102, 122 include a telematics unit, an engine control unit, a transmission control unit, a body control unit, an airbag control unit, a cabin air control unit, a highway situation awareness unit, or a navigation unit.

The first electronic unit 102 comprises a processor (CPU) 104, a memory 106, and one or more input/output devices 108. The memory 106 may store a vehicle signals catalog 116 in a non-transitory portion of the memory 106. The non-transitory portion of the memory 106 may also store one or more applications 110, a communication service layer 112, and an operating system (OS) 114. When the electronic unit 102 is powered on, the OS 114 may be launched and executed by the processor 104, the communication service layer 112 may be launched and executed by the processor 104 after the OS 114 is executing, and the one or more applications 110 may be launched and executed by the processor 104 after the OS 114 and the communication service layer 112 are executing. The process of launching and executing the applications 110, the communication service layer 112, and the OS 114 may be referred to in some contexts as booting the electronic unit 102 and/or boot strapping the electronic unit 102. The OS 114, the communication service layer 112, and the one or more applications 110 may be implemented as software, may implemented as firmware, or may be implemented as a combination of software and firmware. It is understood that the second electronic unit 122 (and optionally additional electronic units) has a structure and components substantially similar to those illustrated and described relative to the first electronic unit 102 in FIG. 1. In an embodiment, the OS 114 is a QNX operating system.

The input/output devices 108 may comprise communication interfaces for communicatively linking the electronic unit 102 to the network 124. The input/output devices 108 may comprise interfaces for communicatively linking the electronic unit 102 to one or more of the mechanical systems 126 and/or to electronic components within the mechanical systems 126, for example to sensors and/or actuators associated with the mechanical systems 126. The input/output devices 108 may comprise a human/driver interface that may present indications on a display and/or may receive user selections and/or control inputs.

In an embodiment, the application 110 may register or subscribe with the communication service layer 112 to receive updates on particular vehicle signals. The vehicle signals may be defined by the vehicle signals catalog 116. Each vehicle signal may be identified and/or associated with a full path filename. The full path filename may comprise a root directory name, zero or more subdirectory names, and a filename. During initialization, the communication service layer 112 reads the vehicle signals catalog 116 and builds a vehicle signals filesystem tree 118 in memory 106 that is conceptually equivalent to a filesystem but whose leaf-nodes do not correspond to files but instead correspond to vehicle signals. In an embodiment, the vehicle signals filesystem tree 118 may be stored in a transitory portion of the memory 106. In an embodiment, the vehicle signals catalog 116 is compatible and/or consistent with a COVESA VSS document or model.

In some contexts herein, there is no distinction maintained between the vehicle signals catalog 116 and the vehicle signals filesystem tree 118, and for simplicity sake actions that may be taken on the vehicle signals filesystem tree 118 - for example looking up an access privilege in the vehicle signals filesystem tree 118 - may instead be described herein as an action taken on the vehicle signals catalog 116 - for example looking up an access privilege in the vehicle signals catalog 116. The generation of the vehicle signals filesystem tree 118 based on the vehicle signals catalog 116 during initialization and the storing of this generated vehicle signals filesystem tree 118 in a transitory portion of the memory 106 is an implementation detail, and it is contemplated that in other embodiments a different implementation may be used by the communication service layer 112.

The communication service layer 112 maps calls from applications 110 to the vehicle signals filesystem tree 118 to appropriate actions on the corresponding objects in the motor vehicle 100, for example reading a tire pressure value or writing (sending a command) a value to an engine throttle position. In an embodiment, the communication service layer 112 uses QNX resource managers to communicate with applications 110 and/or other electronic units 102, 122. It is understood that QNX resource managers provide a highly efficient inter-process communication mechanism. In another embodiment, however, different inter-process and/or inter-component communication frameworks may be used. The communication service layer 112 provides one or more application programming interfaces (APIs) that applications 110 can invoke or call to use a service provided by the communication service layer 112. In an embodiment, the APIs extended by the communication service layer 112 are POSIX APIs.

The application 110 may register that it will publish updates on particular vehicle signals. The application 110 may do many other functions as well, such as execute a complex digital control algorithm to generate commands for an electro-mechanical component of the vehicle 100 and send the command to the electro-mechanical component (e.g., generate and send a throttle command to an engine). Alternatively, the application 110 on the electronic unit 102 may be dedicated primarily to supporting communication of vehicle signals, and other applications executing on the electronic unit 102 may perform functions related to controlling and/or monitoring electro-mechanical components. The communication service layer 114 of the electronic unit 102 may communicate, via the network 124, with the corresponding communication service layer executing on other electronic units 122.

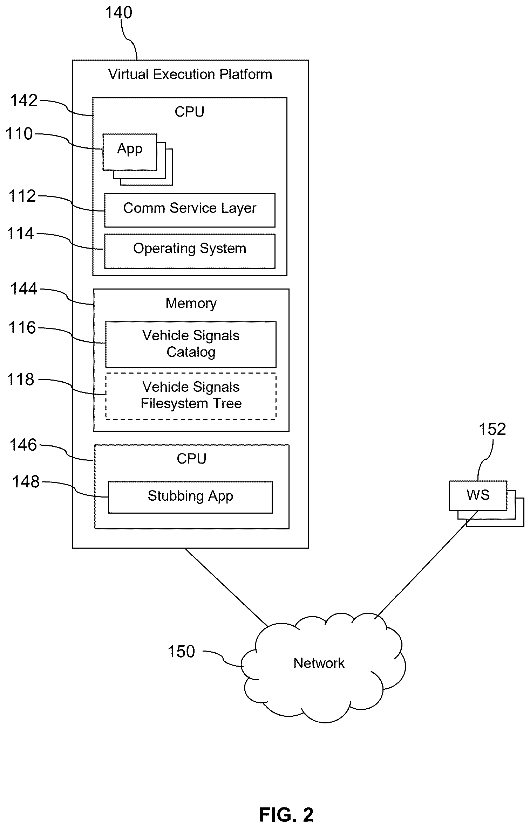

Turning now to FIG. 2, a virtual execution platform 140 is described. In an embodiment, some of the software and/or firmware described with reference to the motor vehicle 100 in FIG. 1 may be executed and tested and/or integrated on the virtual execution platform 140. It is understood that testing and integrating the applications 110 on the electronic unit 102 and/or in the motor vehicle 100 may be impracticable for various reasons. For example, the electronic unit 102 and/or the motor vehicle 100 may be too expensive for each software developer to use as a testing platform for their software or firmware development. A team of software developers for a motor vehicle may comprise 100 or more developers. It can be appreciated that the costs of providing actual electronic units 102 and/or motor vehicles 100 for each developer for testing could get out of hand. Further, in some cases the development of testing software and/or firmware may be taking place concurrently with the development of the electronic units 102 and/or the motor vehicle 100. Said in other words, at the time a software developer is ready to test his or her developed software and/or firmware, the electronic unit 102 may itself not yet be completed in its development and/or production.

The virtual execution platform 140 comprises a processor 142 executing one or more applications 110, the communication service layer 112, and the OS 114; a memory 144 that stores the vehicle signals catalog 116; and possibly a second processor that executes a stubbing application 148. During initialization, the communication service layer 112 reads the vehicle signals catalog 116 and generates the vehicle signals filesystem tree 118 as described above with reference to FIG. 1. The applications 110, the communication service layer 112, and the OS 114 may be substantially the same as the corresponding components described with reference to FIG. 1. The processor 142, the memory 144, and the processor 146 may be virtual components provided as abstractions by the virtual execution platform 140.

The stubbing application 148 may provide functions that simulate or stand in the place of other components of the motor vehicle 100 in the testing stage of software and/or firmware development. For example, if one of the functions of the application 110 is to receive a sensor value from a sensor (e.g., from a wireless tire pressure sensor) and process this signal (e.g., raise a notification if tire pressure drops below a pre-defined threshold), the stubbing application 148 may generate this value and send it to the communication service layer 112. The functionality in the stubbing application 148 can be simple or complex. For example, the stubbing application 148 may just arbitrarily send a tire pressure value of 35 PSI (e.g., above the pre-defined threshold) in a first circumstance and a tire pressure value of 15 PSI (e.g., below the pre-defined threshold) in a second circumstance. Alternatively, in an example, the stubbing application 148 may embody more complicated processing and may, for example, generate and publish a sequence of tire pressure values across the range of 35 PSI to 15 PSI, perhaps while executing a complex simulation scenario.

In a testing and/or system integration environment, a plurality of workstations 152 may interact with the virtual execution platform 140. For example, a workstation 152 operated by a developer or tester may send commands to the communication service layer 112 to invoke POSIX APIs offered by the communication service layer 112. The workstation 152 may execute an ACL on the communication service layer 112 to change permissions associated with a directory, a subdirectory, and/or a filename of the vehicle signals filesystem tree 118. The workstation 152 may execute command line commands that are compatible with POSIX such as cd, Is, cat, mk dir, and echo. The workstation 152 may execute a command line command with an argument that fetches metadata from the vehicle signals filesystem tree 118, for example "LS /vehicle/ . . . /LeftFrontTirePressure ?", where the "?" argument prompts the communication service layer 112 to return the metadata associated with the given filename (e.g., the given vehicle signal). The workstations 152 may communicate with the virtual execution platform 140 via a network 150. The network 150 comprises one or more private networks, one or more public networks, or a combination thereof.

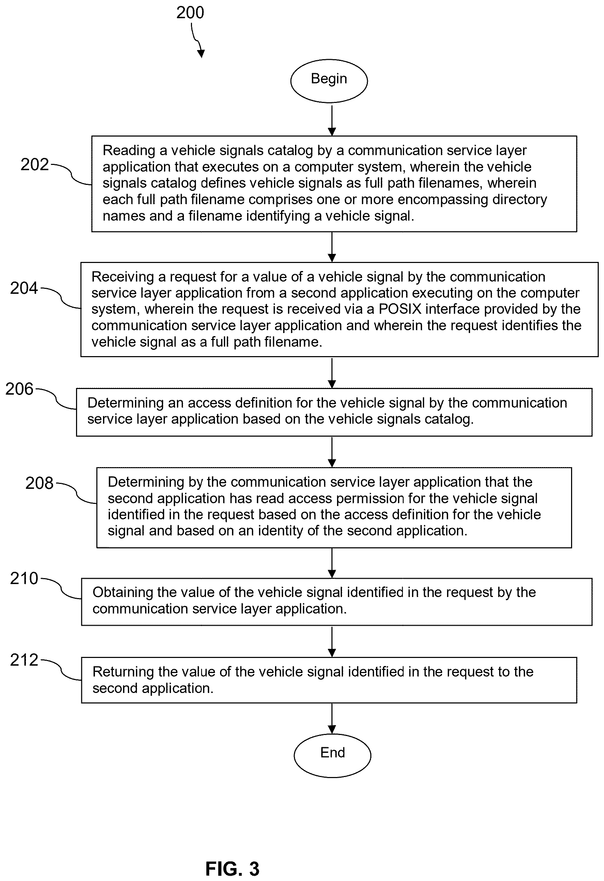

Turning now to FIG. 3, a method 200 is described. In an embodiment, the method 200 is a method of obtaining vehicle signal data by an application executing on a processor. For example, a communication service layer 112 and an application 110 executing on an electronic unit 102, 122 or executing on a virtual execution platform 140 may perform the method 200. At block 202, the method 200 comprises reading a vehicle signals catalog by a communication service layer application that executes on a computer system, wherein the vehicle signals catalog defines vehicle signals as full path filenames, wherein each full path filename comprises one or more encompassing directory names and a filename identifying a vehicle signal. In an embodiment, the computer system is a virtual execution platform, for example a virtual execution platform in a testing and/or integration environment. The virtual execution platform may rely upon compute and memory resources provided by a cloud computing system. In an embodiment, the computer system is an electronics unit located in a motor vehicle. At block 204, the method 200 comprises receiving a request for a value of a vehicle signal by the communication service layer application from a second application executing on the computer system, wherein the request is received via a POSIX interface provided by the communication service layer application and wherein the request identifies the vehicle signal as a full path filename.

Optionally, at block 206, the method 200 comprises determining an access definition for the vehicle signal by the communication service layer application based on the vehicle signals catalog. In an embodiment, the full path filenames in the vehicle signals catalog are compatible with a POSIX directory structure and the access definition of the vehicle signal is defined in the vehicle signals catalog using POSIX filename access permissions. Optionally, at block 208, the method 200 comprises determining by the communication service layer application that the second application has read access permission for the vehicle signal identified in the request based on the access definition for the vehicle signal and based on an identity of the second application. It is understood that while performing the processing of block 206 and block 208 may be desirable to promote security, in an embodiment, the processing of block 206 and block 208 may be omitted. For example, under some circumstances, the application or applications that are able to send a request to the communication service layer for a value of a vehicle signal may be inherently trusted, and in this case no security advantage would actually be obtained by performing the processing of block 206 and block 208 and increased efficiency can be achieved by omitting the processing of block 206 and block 208.

At block 210, the method 200 comprises obtaining the value of the vehicle signal identified in the request by the communication service layer application. In an embodiment, the communication service layer application may obtain the value of the vehicle signal from another electronic unit disposed in a motor vehicle. In an embodiment, the communication service layer application may obtain the value of the vehicle signal from a car area network (CAN) bus disposed in a motor vehicle. In an embodiment, the communication service layer application may obtain the value of the vehicle signal from a stubbing application executing on the computer system, for example, when the communication service layer application executes in a testing and/or system integration environment. At block 212, the method 200 comprises returning the value of the vehicle signal identified in the request to the second application.

In an embodiment, the vehicle signals catalog comprises metadata associated with the directory names and with the filenames. In an embodiment, metadata associated with directory names and the filenames of vehicle signals are defined in a file separate from the vehicle signals catalog, for example in a memory of the computer system.

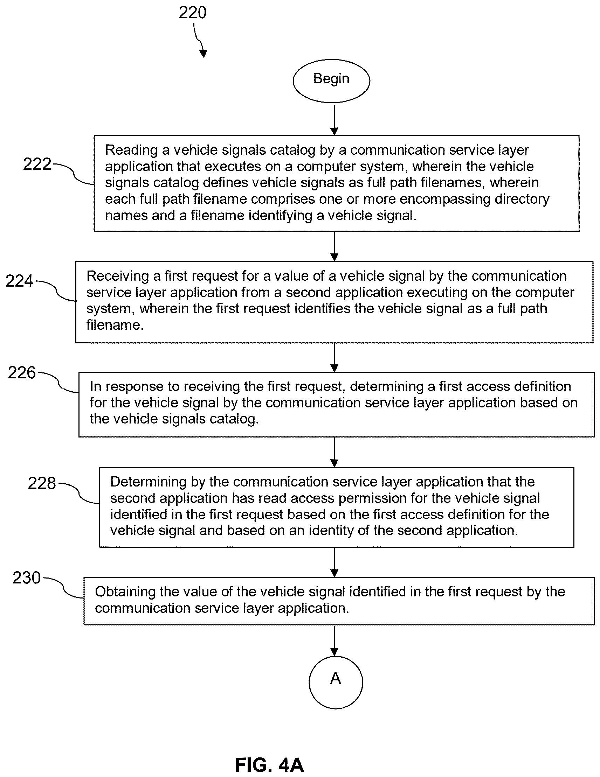

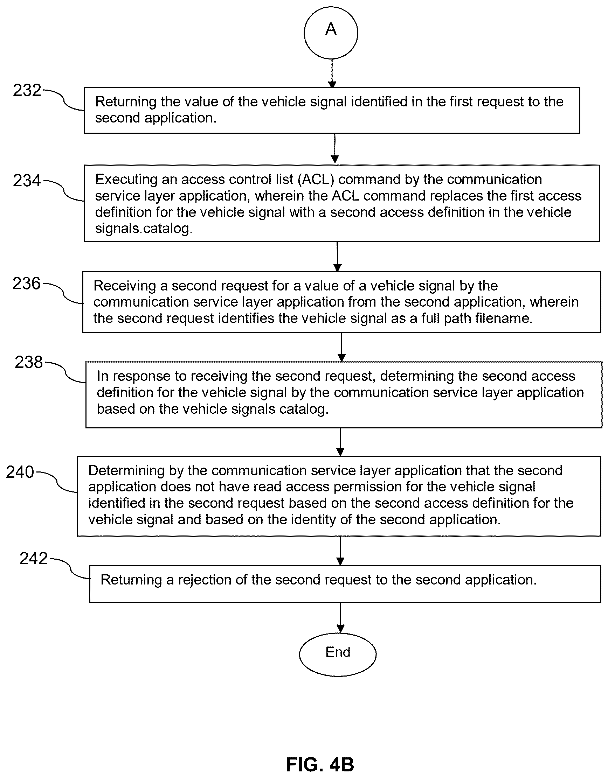

Turning now to FIG. 4A and FIG. 4B, a method 220 is described. In an embodiment, the method 220 is a method of obtaining vehicle signal data by an application executing on a processor. At block 222, the method 220 comprises reading a vehicle signals catalog by a communication service layer application that executes on a computer system, wherein the vehicle signals catalog defines vehicle signals as full path filenames, wherein each full path filename comprises one or more encompassing directory names and a filename identifying a vehicle signal. In an embodiment, the communication service layer application executes on top of a QNX operating system installed on the computer system (e.g., relies upon service provided by the QNX operating system to execute and to access memory and to access input/output resources). In an embodiment, the full path filenames in the vehicle signals catalog are compatible with a POSIX directory structure and wherein the access definition of the vehicle signal is defined in the vehicle signals catalog using POSIX filename access permissions.

At block 224, the method 220 comprises receiving a first request for a value of a vehicle signal by the communication service layer application from a second application executing on the computer system, wherein the first request identifies the vehicle signal as a full path filename. At block 226, the method 220 comprises, in response to receiving the first request, determining a first access definition for the vehicle signal by the communication service layer application based on the vehicle signals catalog.

At block 228, the method 220 comprises determining by the communication service layer application that the second application has read access permission for the vehicle signal identified in the first request based on the first access definition for the vehicle signal and based on an identity of the second application. At block 230, the method 220 comprises obtaining the value of the vehicle signal identified in the first request by the communication service layer application. In an embodiment, the communication service layer application obtains the value of the vehicle signal identified in the first request using a QNX resource manager application programming interface (API).

At block 232, the method 220 comprises returning the value of the vehicle signal identified in the first request to the second application. In an embodiment, the method 220 further comprises providing a data format type to the communication service layer application when it is initialized, wherein a data format of the value of the vehicle signal identified in the first request returned to the second application is defined by the data format type provided during initialization of the communication service layer application. In an embodiment, the data format type is one of a binary data type or an ASCII data type.

At block 234, the method 220 comprises executing an access control list (ACL) command by the communication service layer application, wherein the ACL command replaces the first access definition for the vehicle signal with a second access definition in the vehicle signals catalog. At block 236, the method 220 comprises receiving a second request for a value of the vehicle signal by the communication service layer application from the second application, wherein the second request identifies the vehicle signal as a full path filename. At block 238, the method 220 comprises, in response to receiving the second request, determining the second access definition for the vehicle signal by the communication service layer application based on the vehicle signals catalog.

At block 240, the method 220 comprises determining by the communication service layer application that the second application does not have read access permission for the vehicle signal identified in the second request based on the second access definition for the vehicle signal and based on the identity of the second application. At block 242, the method 220 comprises returning a rejection of the second request to the second application.

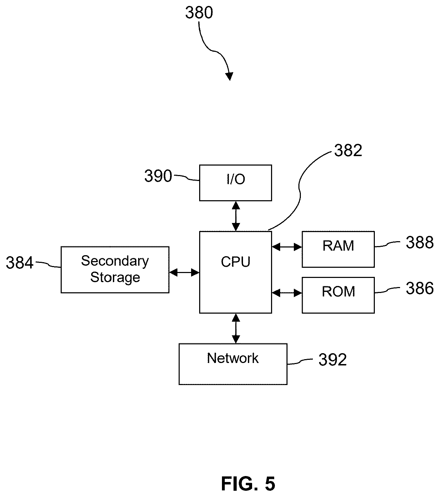

FIG. 5 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid-state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. An in-vehicle electronic unit comprising a communication service layer, comprising:
a processor;
a memory, wherein a non-transitory portion of the memory stores a vehicle signals catalog that defines vehicle signals as full path filenames, wherein each full path filename comprises one or more encompassing directory names and a filename identifying a vehicle signal;
an operating system (OS) stored in the non-transitory portion of the memory that, when executed by the processor, manages access to the memory and manages access to the processor;
an application stored in the non-transitory portion of the memory that, when executed by the processor, processes at least one vehicle signal;
a communication service layer stored in the non-transitory portion of the memory that, when executed by the processor,
reads the vehicle signals catalog from the non-transitory portion of the memory upon initialization of the communication service layer,
receives a request from the application to access a vehicle signal, wherein the request identifies the vehicle signal using a full path filename associated with the vehicle signal,
obtains a first value of the vehicle signal,
maps the first value of the vehicle signal to a second value based on a definition of normalized values for the vehicle signal in the catalog, and
returns the second value to the application.

2. The in-vehicle electronic unit of claim 1, wherein the communication service layer, before obtaining the first value of the vehicle signal,
looks up an access privilege definition for the full path filename identified in the request in the vehicle signals catalog,
compares an identity of the application with the access privilege definition, and
determines, based on comparing the identity of the application with the access privilege definition, that the application has permission to access the vehicle signal.

3. The in-vehicle electronic unit of claim 2, wherein the vehicle signals catalog defines access privileges for directories in addition to filenames defining vehicle signals.

4. The in-vehicle electronic unit of any of claims 1 to 3, wherein the OS is a QNX operating system; and
wherein, optionally, the communication service layer executes an access control list (ACL) command to add a vehicle signal to the vehicle signals catalog.

5. The in-vehicle electronic unit of any of claims 1 to 4, wherein the communication service layer provides a POSIX interface and receives the request from the application via the POSIX interface and returns the second value to the application via the POSIX interface.

6. The in-vehicle electronic unit of any of claims 1 to 5, wherein the in-vehicle electronic unit is one of a telematics unit, an engine control unit, a body control unit, an airbag control unit, a cabin air control unit, a highway situation awareness unit, or a navigation unit; and/or
wherein the in-vehicle electronic unit is located in a passenger car, a pickup truck, a sport utility vehicle (SUV), a mini-van, a delivery van, a delivery truck, a motorhome, a moving van, a moving truck, or a tractor for a semi-trailer.

7. A method of obtaining vehicle signal data by an application executing on a processor, comprising:
reading a vehicle signals catalog by a communication service layer application that executes on a computer system, wherein the vehicle signals catalog defines vehicle signals as full path filenames, wherein each full path filename comprises one or more encompassing directory names and a filename identifying a vehicle signal;
receiving a request for a value of a vehicle signal by the communication service layer application from a second application executing on the computer system, wherein the request is received via a POSIX interface provided by the communication service layer application and wherein the request identifies the vehicle signal as a full path filename;
obtaining the value of the vehicle signal identified in the request by the communication service layer application; and
returning the value of the vehicle signal identified in the request to the second application.

8. The method of claim 7, wherein the computer system is an electronics unit located in a motor vehicle; and/or
wherein the computer system is a virtual execution platform.

9. The method of claim 7 or 8, further comprising
determining an access definition for the vehicle signal by the communication service layer application based on the vehicle signals catalog;
determining by the communication service layer application that the second application has read access permission for the vehicle signal identified in the request based on the access definition for the vehicle signal and based on an identity of the second application,
wherein the full path filenames in the vehicle signals catalog are compatible with a POSIX directory structure and wherein the access definition of the vehicle signal is defined in the vehicle signals catalog using POSIX filename access permissions.

10. The method of any of claims 7 to 9, wherein the vehicle signals catalog comprises metadata associated with the directory names and with the filenames; and
wherein, optionally, metadata associated with the directory names and the filenames of the vehicle signals are defined in a separate file in the memory of the computer system.

11. A method of obtaining vehicle signal data by an application executing on a processor, comprising:
reading a vehicle signals catalog by a communication service layer application that executes on a computer system, wherein the vehicle signals catalog defines vehicle signals as full path filenames, wherein each full path filename comprises one or more encompassing directory names and a filename identifying a vehicle signal;
receiving a first request for a value of a vehicle signal by the communication service layer application from a second application executing on the computer system, wherein the first request identifies the vehicle signal as a full path filename;
in response to receiving the first request, determining a first access definition for the vehicle signal by the communication service layer application based on the vehicle signals catalog;
determining by the communication service layer application that the second application has read access permission for the vehicle signal identified in the first request based on the first access definition for the vehicle signal and based on an identity of the second application;
obtaining the value of the vehicle signal identified in the first request by the communication service layer application;
returning the value of the vehicle signal identified in the first request to the second application;
executing an access control list (ACL) command by the communication service layer application, wherein the ACL command replaces the first access definition for the vehicle signal with a second access definition in the vehicle signals catalog;
receiving a second request for a value of the vehicle signal by the communication service layer application from the second application, wherein the second request identifies the vehicle signal as a full path filename;
in response to receiving the second request, determining the second access definition for the vehicle signal by the communication service layer application based on the vehicle signals catalog;
determining by the communication service layer application that the second application does not have read access permission for the vehicle signal identified in the second request based on the second access definition for the vehicle signal and based on the identity of the second application; and
returning a rejection of the second request to the second application.

12. The method of claim 11, wherein the communication service layer application executes on top of a QNX operating system installed on the computer system; and
wherein, optionally, the communication service layer application obtains the value of the vehicle signal identified in the first request using a QNX resource manager application programming interface (API).

13. The method of claim 11 or 12, wherein the full path filenames in the vehicle signals catalog are compatible with a POSIX directory structure and wherein the access definition of the vehicle signal is defined in the vehicle signals catalog using POSIX filename access permissions.

14. The method of any of claims 11 to 13, further comprising providing a data format type to the communication service layer application when it is initialized, wherein a data format of the value of the vehicle signal identified in the first request returned to the second application is defined by the data format type provided during initialization of the communication service layer application; and
wherein, optionally, the data format type is one of a binary data type, a float data type, an ASCII data type, and an EBCIDIC data type.

15. A computer program product comprising instructions that, when executed by a processor, cause the method according to any one of claims 7 to 14 to be performed.
